# EUROPÄISCHE PATENTSCHRIFT

(11) **EP 1 529 971 B1**
(45) Veröffentlichungstag und Bekanntmachung des Hinweises auf die Patenterteilung: **09.01.2008**
(21) Anmeldenummer: 04023540.0
(22) Anmeldetag: 02.10.2004
(51) Int. Cl.: F16C 9/02, F02F 7/00

(54) **Geteiltes Lager**
Divided bearing
Palier divisé

(30) Priorität: 07.11.2003 DE 10352034
(43) Veröffentlichungstag der Anmeldung: 11.05.2005
(73) Patentinhaber: Bayerische Motoren Werke Aktiengesellschaft, 80809 München (DE)
(72) Erfinder: Firmenich, Rainer, 82140 Olching (DE); Pollack, Jens, 81241 München (DE)

(56) Entgegenhaltungen:
- DE-A1- 19 537 191
- US-A- 4 693 216
- US-B1- 6 231 240

## Beschreibung

Die Erfindung betrifft ein geteiltes Lager mit den Merkmalen aus dem Oberbegriff des Patentanspruchs 1.

Sie geht von der deutschen Offenlegungsschrift DE 195 37 191 A1 aus. In dieser ist eine Kurbelwellenlagerung für eine Brennkraftmaschine beschrieben, die aus zwei miteinander verschraubten Lagerabschnitten, bei denen jeweils ein Einlegeteil aus einem eisenmetallischen Werkstoff in ein Umgussteil aus einer Leichtmetalllegierung eingebettet ist, besteht. Die Einlegeteile bestehen aus profilierten Formteilen mit Durchbrüchen und Verdickungen, sowie einem halbkreisförmigen Träger, der den jeweiligen Teil der Lagerbohrung aufnimmt. Die Einlegeteile werden von den Lagerschrauben durchdrungen, die sich einerseits an äußeren Schraubflächen am Umgussteil des einen Lagerabschnitts abstützen und im Umgussteil des anderen Lagerabschnittes verschraubt sind.

Durch die beim Betrieb der Brennkraftmaschine auftretenden Lagerkräfte in Querrichtung, kann es passieren, dass das Einlegeteil, das auch Insert genannt wird, parallel zur Lagertrennfläche, bzw. Trennebene verschoben wird. Hieraus können zu hohe Lagerverzüge resultieren oder der Verbund zwischen Insert und Umguss kann gelöst werden.

Aufgabe der vorliegenden Erfindung ist es, ein geteiltes Lager mit einem Insert darzustellen, das einen ständigen Formschluss zwischen Insert und Umguss gewährleistet.

Diese Aufgabe wird erfindungsgemäß von dem Merkmal im kennzeichnenden Teil des Patentanspruchs 1 gelöst.
Durch die erfindungsgemäße Ausgestaltung wird nach der Verschraubung des geteilten Lagers das Umgussmaterial in den konkaven Bereich des inserts gedrückt. Durch diese Maßnahme wird ein sicherer Formschluss erzielt, wodurch die Sicherheit im Hauptlagerstuhlbereich, wie z.B. gegen das Ablösen des Umgusses von dem Insert bzw. eine Parallelverschiebung des Inserts in der Teilungsebene des geteilten Lagers erhöht wird.

Gemäß Patentanspruch 2 kann der konkave Bereich entweder zylindrisch oder kalottenförmig ausgebildet sein. Bei der zylindrischen Ausgestaltung, sofern sich der zylindrische Bereich in Richtung der Kurbelwellenachse erstreckt, ist die Sicherheit gegen ein Auswandern des Inserts gegenüber dem Umgussmaterial in der Lagertrennebene, senkrecht zur Kurbelwellenachse deutlich erhöht. Bei einer kalottenförmigen Ausgestaltung des konkaven Bereiches ist das mögliche Auswandern des Inserts in allen Richtungen der Trennebene des geteilten Lagers sicher gewährleistet. Die kalottenförmige Ausgestaltung hat darüber hinaus den Vorteil, dass eine Zentrierung des Inserts bezüglich der Schraubverbindung stattfindet.

Bei Verwendung der im Patentanspruch 3 genannten Werkstoffe für das Insert, wird eine Festigkeit des Lagers erzielt, die für den Betrieb einer Brennkraftmaschine ausreichend ist. Die beispielsweise über die Kurbelwelle eingeleiteten Hauptlagerkräfte können von diesen Werkstoffen, bei entsprechender Dimensionierung, problemlos aufgenommen werden.

Die Ausgestaltung gemäß Patentanspruch 4 gewährleistet auch bei steigenden Temperaturen eine sichere Verschraubung des geteilten Lagers. Die Größe der Schraubenzusatzkraft bei einer Temperaturänderung kann konstruktiv durch die Verschraubungshöhe im Leichtmetallanteil gesteuert werden.

Die im Patentanspruch 5 genannte Fertigungsmethode zur Herstellung einer geteilten Lagerhälfte ist eine schnelle und einfache Herstellmethode für eine Hälfte eines geteilten Lagers.

Das Zusammenfassen mehrerer geteilter Lager zu einem Bedplate gemäß Patentanspruch 6 erlaubt den Aufbau einer sehr steifen Lagergasse mit der erfindungsgemäßen Ausgestaltung des geteilten Lagers. Somit ist nicht nur der Aufbau einzelner geteilter Lagerhälften möglich, sondern diese können auch zu einem Bedplate für Brennkraftmaschinen mit beliebig vielen Zylindern zusammengesetzt werden.

Im Folgenden ist die Erfindung anhand eines bevorzugten Ausführungsbeispieles in einer einzigen Figur näher erläutert.

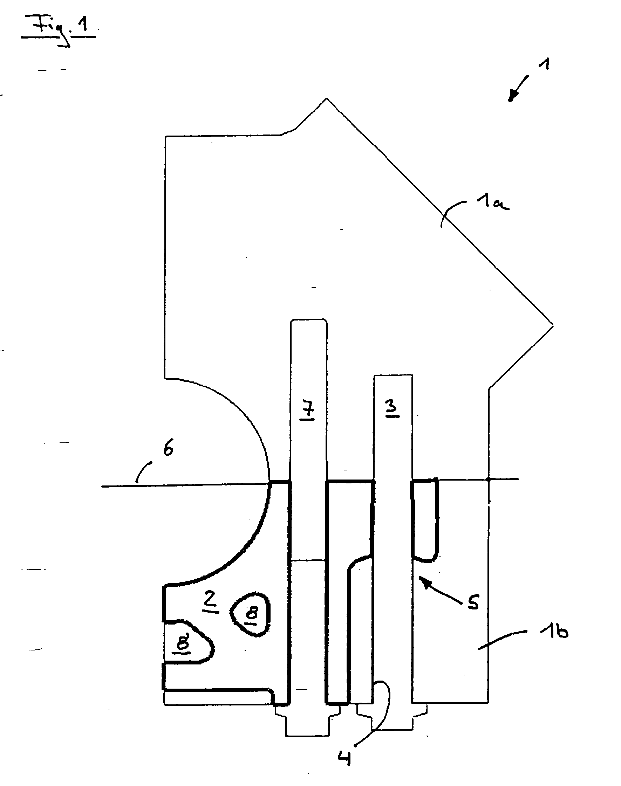

Fig. 1 zeigt schematisch einen Längsschnitt durch ein halbes geteiltes Lager 1. Das geteilte Lager 1 weist eine Trennebene 6 auf, die eine erste und eine zweite Lagerhälfte (1a, 1b) voneinander trennt. Die erste Lagerhälfte 1 a ist hier beispielsweise ein ortsfest an die Brennkraftmaschine angeordneter Kurbelwellenlagerstuhl, die zweite Lagerhälfte 1 b ist ein korrespondierender Kurbelwellenlagerdeckel zur ersten Lagerhälfte 1 a.

Wie aus Fig. 1 ersichtlich, ist das geteilte Lager 1, d. h. sind die erste und die zweite Lagerhälfte 1a, 1b mittels zweier Schrauben 3, 7, miteinander auf Block verschraubt. Die zweite Lagerhälfte 1b weist ein Insert 2 auf, welches lagerseitig eine Lagerbohrung bildet, und im Bereich der zweiten Schraube 7 die gesamte Höhe der zweiten Lagerhälfte 1 b bildet. Im Bereich der ersten Schraube 3 umgreift das Insert 2, im Gegensatz zum Bereich der zweiten Schraube 7, wo das Insert die gesamte Höhe der zweiten Lagerhälfte 1 b bildet, nur einen Teil der Höhe der zweiten Lagerhälfte 1 b und weist im Bereich der Schraube 3 einen konkaven Bereich 5 auf. Der konkave Bereich 5 ist kalottenförmig ausgebildet und vollständig mit einem Leichtmetall ausgefüllt, welches sich bis zum Kopf der ersten Schraube 3 erstreckt. Ferner weist das Insert 2 zwei Durchbrüche 8, 8' auf, welche ebenfalls für eine feste Verankerung des Inserts 2 in der zweiten Lagerhälfte 1 b benötigt werden.

Das Insert 2 ist aus einem Eisenwerkstoff, kann jedoch auch aus einem Sintermaterial, oder einem MMC (Metall-Matrix-Composit), oder einer Kombination aus diesen Materialien bestehen. Damit aus dem Insert 2 ein vollständiger Lagerdeckel, eine zweite Lagerhälfte 1b produziert werden kann, wird dieses Insert in einem Umgussverfahren mit einem Leichtmetall umgegossen. Das Leichtmetall weist hierbei stets einen größeren Wärmeausdehnungskoeffizienten als das Insert 2 auf. Als Leichtmetalle für den Umguss kommen beispielsweise Aluminiumlegierungen und/oder Magnesiumlegierungen, bzw. sonstige Leichtmetalllegierungen zum Einsatz. Die erste Schraube 3 und die zweite Schraube 7 können beispielsweise aus einem Stahlwerkstoff sein, jedoch auch andere Materialien, wie Buntmetalle, sind möglich. Ferner kann die erste und/oder zweite Schraube 3, 7 auch als Passschraube ausgebildet sein.

Im vorliegenden Ausführungsbeispiel weist nur die zweite Lagerhälfte 1b, der Lagerdeckel, ein Insert auf. In weiteren Ausführungsvarianten kann jedoch auch die erste Lagerhälfte 1a, der Lagerstuhl, ein entsprechendes Insert aufweisen. Darüber hinaus ist es möglich, bei einer mehrzylindrigen Brennkraftmaschine zwei oder sämtliche Kurbelwellenlagerdeckel 1b der Brennkraftmaschine zu einem einzigen Bedplate zusammenzufassen. Der grundsätzliche Aufbau der Inserts 2 ist hierbei unverändert. Allerdings weisen vorzugsweise sämtliche Inserts 2 zumindest im Bereich der ersten Schraube 3 einen konkaven Bereich 5 auf, der zylindrisch oder kalottenförmig ausgebildet sein kann. Auch sternförmige oder sonstige konkave Formen sind möglich, sofern gewährleistet ist, dass beim Verspannen der Schraube 3 der konkave Bereich einen Formschluss mit dem Umgussmaterial, dem Leichtmetall, bildet. Selbstverständlich erfolgt die Verschraubung bei einem Bedplate wie bei einem einzelnen geteilten Lager 1 vom Material mit niedrigem Elastizitätsmodul zum Material mit hohem Elastizitätsmodul, wobei nur ein primärer Materialübergang in der zweiten Lagerhälfte 1b für die Verschraubung mit dem konkaven Bereich 5 auftritt.

Neben der speziellen Ausführungsform als Kurbelwellenlager kann die erfindungsgemäße Ausgestaltung für alle geteilten Lager, insbesondere hochbelasteten geteilten Lagern, eingesetzt werden.

Zusammenfassend kann gesagt werden, dass durch den Formschluss die Dehnung bei Erwärmung zusätzlich behindert wird und Kräfte zwischen dem Insert 2 und dem Leichtmetall übertragen werden können. Demzufolge wird die Bauteilgesamtsteifigkeit und damit das Querkraftaufnahmevermögen erheblich erhöht. Zusätzlich werden gießtechnisch unvermeidbare Spalte durch die Schraubenvorspannkraft im Formschlussbereich eliminiert. Durch die kleinere Verschraubungshöhe des Leichtmetallanteils mit hohem Wärmeausdehnungskoeffizienten wird die Schraubenkraftänderung reduziert. Demzufolge kann der Schraubverbund entsprechend kleiner dimensioniert werden und somit Bauraum, Gewicht oder teure Maßnahmen eingespart werden.

### Bezugszeichenliste

- 1: Geteiltes Lager
- 1a: Erste Lagerhälfte
- 2b: Zweite Lagerhälfte
- 2: Insert
- 3: Erste Schraube
- 4: Bohrung
- 5: Konkaver Bereich
- 6: Trennebene
- 7: Zweite Schraube
- 8, 8': Durchbruch

## Patentansprüche

1. Geteiltes Lager (1) aus einem Leichtmetall, insbesondere Kurbelwellenlager einer Brennkraftmaschine, wobei zumindest eine Lagerhälfte (1a, 1b) ein zumindest teilweise von dem Leichtmetall umschlossenes Insert (2) aus einem Werkstoff mit einem gegenüber dem Leichtmetall größeren Elastizitätsmodul aufweist und die Lagerhälften (1a, 1b) mittels zumindest einer Schraube (3) gegeneinander verspannbar sind, wobei die Schraube (3) durch eine Bohrung (4) in dem Leichtmetall und dem Insert (2) ragt,
**dadurch gekennzeichnet, dass**
**das** Insert (2) im Bereich der Bohrung (4) auf einer dem Leichtmetall zugewandten Seite einen konkaven Bereich (5) in zumindest einer Dimension aufweist.

2. Geteiltes Lager nach Patentanspruch 1,
**dadurch gekennzeichnet, dass** der konkave Bereich zylindrisch oder kalottenförmig ausgebildet ist.

3. Geteiltes Lager nach Patentanspruch 1 oder 2,
**dadurch gekennzeichnet, dass** das Insert (2) aus einem Eisenwerkstoff und/oder einem Sintermaterial und/oder einem Metall-Matrix-Composit ist.

4. Geteiltes Lager nach einem der Patentansprüche 1 bis 3,
**dadurch gekennzeichnet, dass** das Leichtmetall einen größeren Wärmeausdehnüngskoeffizienten aufweist als das Insert (2).

5. Geteiltes Lager nach einem der Patentansprüche 1 bis 4,
**dadurch gekennzeichnet, dass** das Insert (2) von dem Leichtmetall umgossen ist.

6. Geteiltes Lager nach einem der Patentansprüche 1 bis 5,
**dadurch gekennzeichnet, dass** zumindest zwei Lagerhälften (1a, 1 b) zu einem Bedplate zusammenfassbar sind.

## Claims

1. A divided bearing (1) made of light metal, especially a crankshaft bearing of an internal combustion engine, wherein at least one half-bearing (1a, 1b) comprises an insert (2) at least partly enclosed by the light metal and made of a material having a higher elastic modulus than the light metal, and the half-bearings (1a, 1b) are clamped together by at least one screw (3), wherein the screw (3) projects through a bore (4) in the light metal and in the insert (2), **characterised in that** the insert (2) in the neighbourhood of the bore (4) has a concave region (5) in at least one dimension on the side facing the light metal.

2. A divided bearing according to claim 1,
**characterised in that** the concave region is cylindrical or cap-shaped.

3. A divided bearing according to claim 1 or claim 2,
**characterised in that** the insert (2) is made of an iron material and/or a sintered material and/or a metal-matrix composite.

4. A divided bearing according to any of claims 1 to 3,
**characterised in that** the light metal has a higher thermal expansion coefficient than the insert(2).

5. A divided bearing according to any of claims 1 to 4,
**characterised in that** the insert (2) is embedded by the light metal by casting.

6. A divided bearing according to any of claims 1 to 5,
**characterised in that** at least two half-bearings (1a, 1b) are combinable in a bedplate.

## Revendications

1. Palier divisé (1) en métal léger notamment palier de vilebrequin d'un moteur à combustion interne,
au moins une moitié de palier (1a, 1b) ayant un insert (2) au moins partiellement entouré par le métal léger, l'insert étant en un matériau ayant un module d'élasticité plus grand que celui du métal léger et les moitiés de palier (1a, 1b) sont serrées l'une contre l'autre par au moins une vis (3),
la vis (3) traversant un perçage (4) du métal léger de l'insert (2),
**caractérisé en ce que**
l'insert (2) présente au niveau du perçage (4), sur un côté tourné vers le métal léger, une zone concave (5) dans au moins une dimension.

2. Palier divisé selon la revendication 1,
**caractérisé en ce que**
la zone concave est cylindrique ou en forme de calotte.

3. Palier divisé selon l'une des revendications 1 ou 2,
**caractérisé en ce que**
l'insert (2) est en un matériau ferreux et/ou en un matériau fritté et/ou en un composite métal-matrice.

4. Palier divisé selon l'une des revendications 1 à 3,
**caractérisé en ce que**
le métal léger a un coefficient de dilatation thermique plus grand que celui de l'insert (2).

5. Palier divisé selon l'une des revendications 1 à 4,
**caractérisé en ce que**
le métal léger est coulé autour de l'insert (2).

6. Palier divisé selon l'une des revendications 1 à 5,
**caractérisé en ce qu'**
au moins deux moitiés de palier (1a, 1b) sont assemblées pour former une plaque de base.
